# EUROPÄISCHE PATENTSCHRIFT

(11) **EP 1 743 948 B1**
(45) Veröffentlichungstag und Bekanntmachung des Hinweises auf die Patenterteilung: **27.10.2010**
(21) Anmeldenummer: 06014231.2
(22) Anmeldetag: 10.07.2006
(51) Int. Cl.: C21C 5/46

(54) **Schmelzofen und Verfahren zu dessen Betrieb**
Melting furnace and method of its operation
Fours de fusion et procédé de son opération

(30) Priorität: 16.07.2005 DE 102005033287
(43) Veröffentlichungstag der Anmeldung: 17.01.2007
(73) Patentinhaber: SMS Siemag AG, 40237 Düsseldorf (DE)
(72) Erfinder: Uebber, Norbert, 40764 Langenfeld (DE); Schubert, Manfred, 46147 Oberhausen (DE); Falkenreck, Udo, 44797 Bochum (DE); Kempken, Jens, Dr., 41564 Kaarst (DE)
(74) Vertreter: Klüppel, Walter

(56) Entgegenhaltungen:
- EP-A- 1 850 081
- WO-A-00/60297
- WO-A-03/029499
- DATABASE WPI Week 198047 Thomson Scientific, London, GB; AN 1980-83940C XP002513769 & SU 727 326 A (KRAMA MECH ENG RES) 17. April 1980 (1980-04-17) & SU 727 326 A1 (KRAMATORSK NI PT I MASH [SU]) 17. April 1980 (1980-04-17)

## Beschreibung

Die Erfindung betrifft einen Schmelzofen, insbesondere einen Lichtbogenofen zum Erzeugen einer Schmelze und ein Verfahren zu dessen Betrieb.

Ein derartiger Schmelzofen ist zum Beispiel aus der WO 03/029499 A1 bekannt. Bei dem dort offenbarten Schmelzofen handelt es sich um einen Lichtbogenofen, der zum Abstechen von Schmelze kippbar mit einem exzentrisch positionierten Abstichkanal ausgebildet ist. Der Abstichkanal ist dort in einem separat angebauten Erker vorgesehen, welcher an eine Abschlusswand einer Ofenwanne angrenzt. Zumindest ein die Ofenwanne und den Erker verbindender Kanal ist vorgesehen, um bei einem Abstichvorgang ein Fließen der Schmelze von der Ofenwanne in den Gefäßerker zu ermöglichen. Ein zum Abstechen der Schmelze notwendiger Gasraum in dem Erker wird dadurch geschaffen, dass auf dem Erker eine druck- und vakuumdichte Abdeckhaube vorgesehen ist. An die Abdeckhaube ist eine Gaszuführung mit einem Gasventil zum Zuführen von Gas in das von der Abdeckhaube aufgespannte Volumen angeschlossen. Die Abdeckhaube ist so an dem Erker angebracht, dass das von ihr bereitgestellte Gasvolumen in der Umgebung desjenigen Endes des Abstichkanals bereitgestellt werden kann, in welches die Schmelze bei einem Abstichvorgang eintritt.

Die nicht vorveröfientllchte Patentschrift EP 1 850 081 A1 offenbart ein metallurgisches Gefäß eines Lichtbogenofens mit einem Abstichkanal im Boden des Gefäßes. Auf den Abstichkanal ist eine Abdeckhaube mit einer Versorgungsleitung und mit einer Verlängerung des Abstichkanals absenkbar. Die Verlängerung Ist Abstichkanals wirkt zwar als Überhöhung des Abstichkanals gegenüber dem Boden des Gefäßes, allerdings Ist diese Verlängerung / Überhöhung Bestandteil der Abdeckhaube und nicht des Abstichkanals selbst.

Die Patentschrift SU 727 326 A & SP 002513769 offenbart ein Schmelzgefäß mit einem Abstichkanal, der über das Niveau des Bodens erhöht und dadurch mit Schmelze umspült ist. Der Abstichkanal ist einer Abdeckhaube bedeckt, so dass in den Zwischenraum Gas unter Druck einbringbar ist; dadurch kann der Abstichvorgang gesteuert werden.

### Aufgabe

Ausgehend von diesem Stand der Technik liegt der Erfindung die Aufgabe zugrunde, einen bekannten Schmelzofen mit einer Abdeckhaube und einem Abstichkanal dahingehend weiterzubilden, dass bei einem Abstichvorgang Schmelze auch dann noch in den Abstichkanal hinein angesaugt werden kann, wenn deren Pegel außerhalb der Abdeckhaube im Innern des Gefäßes unter die Oberkante des in das Innere des Gefäßes hineinragenden Teils des Abstichkanals, aber noch nicht unter die Unterkante der Abdeckhaube gesunken ist.

### Lösung

Diese Aufgabe wird durch den Gegenstand des Patentanspruchs 1 gelöst.

Demnach weist der Schmelzofen eine Abdeckhaube auf, welche über den in das Innere des Gefäßes hineinragenden Teil des Abstichkanals gestülpt bzw. verfahren werden kann. Es ist dann über den Versorgungskanal zum Beispiel ein Evakuieren eines von der Abdeckhaube aufgespannten Volumens, in das auch der in das Innere des Gefäßes hineinragende Teil des Abstichkanals hineinragt, möglich. Auf diese Weise ist es möglich, bei einem Abstichvorgang Schmelze auch dann noch in den Abstichkanal hinein anzusaugen, wenn deren Pegel außerhalb der Abdeckhaube Im Innern des Gefäßes unter die Oberkante des In das Innere des Gefäßes hineinragenden Teils des Abstichkanals, aber noch nicht unter die Unterkante der Abdeckhaube gesunken ist.

Über den Versorgungskanal kann zum Beispiel Gas in das von der Abdeckhaube aufgespannte Volumen oder Granulat in den Abstichkanal verbracht werden. Außerdem kann durch den Versorgungskanal das bereits erwähnte Evakuieren des von der Abdeckhaube aufgespannten Volumens realisiert werden.

Insbesondere zur Ausbildung eines Vakuums beim Evakuieren während eines Abstichvorganges muss die Abdeckhaube gasdicht mit der Schmelze abschließen; zu diesem Zweck wird zumindest ihr unterer Rand bei jedem Abstichvorgang In die Schmelze eingetaucht, was einen hohen Verschleiß von insbesondere diesem Rand zur Folge hat. Es ist deshalb vorteilhaft, wenn die Abdeckhaube lösbar mit dem Versorgungskanal verbunden ist, um sie bei zu großem Verschleiß einfach austauschen zu können.

Die Ausbildung eines Teils des Abstichkanals über das Niveau des Bodens des Gefäßes hinaus In das Innere des Gefäßes hineinragend bietet den Vorteil, dass In dem Gefäß vorhandene Schmelze den in das Gefäß hineinragenden Teil des Abstichkanals umspült und auf diese Weise automatisch aufwärmt. Bei einem Abstichvorgang wird der Abstichkanal dann nicht nur durch in seinem Innern abfließende Schmelze, sondern auch durch an seiner Außenseite befindliche Schmelze erwärmt. Das Risiko eines Ein- oder Anfrierens der Schmelze Ist dadurch gebannt.

Es ist von Vorteil, die Abdeckhaube vorzugsweise zusammen mit dem Versorgungskanal verfahrbar auszubilden, um die Abdeckhaube dann, wenn sie nicht für einen Abstichvorgang benötigt wird, aus der Schmelze oder gänzlich aus dem Gefäß heraus zu verfahren, weil sie dann keinem Verschleiß durch die Schmelze unterliegt.

Weil die Abdeckhaube aus den genannten Gründen bei dem Abstichvorgang In die Schmelze eingetaucht wird, muss sie als Ganzes oder zumindest ihre äußere Beschichtung feuerfest ausgebildet sein.

Vorteilhafterwelse umfasst der Schmelzofen einen Schlackensensor zum Erfassen von unter die Abdeckhaube strömender Schlacke und/oder einen Schmeizenpegelsensor zum Erfassen des Pegels der Schmelze unter der Abdeckhaube. Vorteilhafterweise kann dann der Fluss der Schmelze während eines Abstichvorganges in dem Abstichkanal durch Steuern des Gasgehaltes oder des Vakuums unter der Abdeckhaube im Ansprechen auf Messsignale dieses Schlackensensors und/oder dieses Schmelzenpegelsensors gesteuert werden.

Vorteilhafterweise ist der über das Bodenniveau des Gefäßes in das Innere des Gefäßes hineinragende Teil des Abstichkanals mit dem restlichen Teil des Abstichkanals lösbar verbunden, weil dann eine Rest- oder Notentleerung des Gefäßes durch mechanische Beseitigung des in das Gefäß hineinragenden Teils des Abstichkanals möglich ist.

Vorteilhafterweise ist das Gefäß, in dessen Boden der Abstichkanal vorgesehen ist, als Gefäßerker ausgebildet und zumindest über einen Kanal so mit einer Ofenwanne des Schmelzofens verbunden, dass die Schmelze bei einem Abstichvorgang aus der Wanne in das Gefäß beziehungsweise den Gefäßerker fließt.

Der Abstich kann vorteilhafterweise bei kippbaren Öfen notfalls auch ohne Stempel zuverlässig ausgeführt werden.

Vorteilhafterweise lassen sich herkömmliche Schmelzöfen mit exzentrischem oder zentrischem Bodenabstich mit einem erfindungsgemäß ausgebildeten Abstichkanal und vorzugsweise auch mit einer zugeordneten erfindungsgemäßen Abdeckhaube ausstatten.

Die oben genannte Aufgabe wird weiterhin durch ein Verfahren zum Betreiben eines Schmelzofens gelöst. Die Vorteile dieses Verfahrens entsprechen im Wesentlichen den oben mit Bezug auf den beanspruchten Schmelzofen genannten Vorteilen. Ergänzend sei angemerkt, dass der Abstichvorgang vorteilhafterweise durch ein Einbringen von Inertgas in das durch die Abdeckhaube aufgespannte Volumen gestoppt, gesteuert oder unterbrochen werden kann.

Weitere vorteilhafte Ausgestaltungen des beanspruchten Schmelzofens und des beanspruchten Verfahrens sind Gegenstand der abhängigen Ansprüche.

### Der Beschreibung sind insgesamt 3 Figuren beigefügt, wobei

- Fig. 1: einen Gefäßerker für einen Schmelzofen gemäß der Erfindung;
- Fig. 2a - 2e: verschiedene Verfahrpositionen einer Abdeckhaube mit einem Versorgungskanal während eines Abstichvorganges;
- Fig. 3a und 3b: das Eindringen von Schlacke unter die Abdeckhaube und das Steuern eines Abstichvorganges beim Eindringen der Schlacke unter die Haube;
zeigt.

### Ausführungsbeispiele

Die Erfindung wird nachfolgend in Form von Ausführungsbeispielen unter Bezugnahme auf die genannten Figuren detailliert beschrieben.

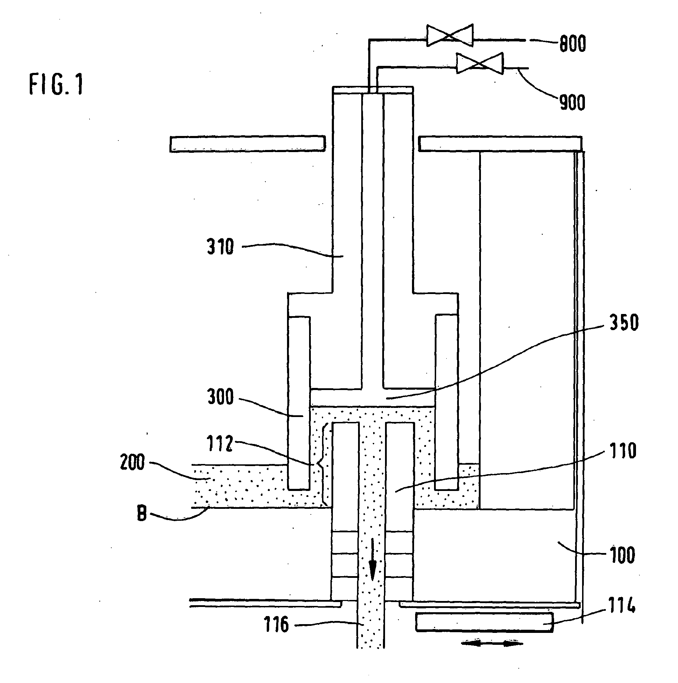

Figur 1 zeigt ein als Gefäßerker ausgebildetes Gefäß 100 eines Schmelzofens (nicht gezeigt) zum Aufnehmen von zumindest einem Teil einer Schmelze. Der Gefäßerker ist typischerweise an einer Abschlusswand einer Ofenwanne des Schmelzofens montiert, in welcher sich zunächst der größte Teil der Schmelze sammelt. Die Ofenwanne ist jedoch mit dem Gefäßerker verbunden, so dass zumindest bei einem Abstichvorgang die Schmelze 200 auch in das Gefäß 100 beziehungsweise in den Gefäßerker gelangen kann.

Diese Situation ist in Figur 1 dargestellt. Es ist zu erkennen, dass der Gefäßerker einen Abstichkanal 110 im Boden des Gefäßes 100 aufweist, wobei ein Teil 112 des Abstichkanals 110 erfindungsgemäß über das Niveau des Bodens B des Gefäßes 100 hinaus in das Innere des Gefäßes hineinragend ausgebildet ist. Dem Abstichkanal 110 zugeordnet ist eine Abdeckhaube 300, welche mit einem Versorgungskanal 310 verbunden ist und zusammen mit diesem in vertikaler Richtung verfahrbar ist. In Figur 1 ist die Abdeckhaube zusammen mit dem Versorgungskanal 310 soweit in Richtung Abstichkanal 110 verfahren, dass sie über den in das Innere des Gefäßerkers hineinragenden Teil 112 des Abstichkanals 110 gestülpt ist. Dabei ist es wichtig, dass zwischen der Innenseite der Abdeckhaube 300 und dem Boden B des Gefäßes sowie der Außenseite des Teils 112 immer noch ein ausreichend großer Abstand verbleibt, um, wie weiter unten erklärt wird, einen siphonartigen Fleißkanal für die Schmelze 200 freizuhalten. Es ist dann ein Ansaugen der Schmelze 200 unter die Abdeckhaube 300 beziehungsweise in das von ihr aufgespannte Volumen sowie ein Abfließen der Schmelze in Pfeilrichtung in Form eines Abstichstrahles 116 durch den geöffneten Abstichkanal 110 möglich. Der Abstichkanal 110 ist in Figur 1 geöffnet, weil ein Abstichschieber 114 den Abstichkanal 110 nicht verschließt, sondern beiseite geschoben ist.

Wie in Figur 1 zu erkennen ist, ragt die Abdeckhaube 300 während eines Abstichvorganges zumindest zeitweise in die Schmelze 200 hinein. Es ist deshalb wichtig, dass die Abdeckhaube 300 oder zumindest eine äußere Beschichtung der Abdeckhaube feuerfest ausgebildet ist. An den Versorgungskanal 310 ist eine Evakuierungsleitung 800 zum Evakuieren eines Gasraumes 350 als Teil des von der Abdeckhaube 300 aufgespannten Volumens 320 angeschlossen. Der Gasraum bildet sich typischerweise in einem zwischen der Oberfläche der angesaugten Schmelze 200 und dem verbleibenden Restvolumen unter der Abdeckhaube und innerhalb des Versorgungskanals 310 aus.

Weiterhin ist der Versorgungskanal 310 an eine Gasleitung 900 angeschlossen zum Einbringen von Inertgas in das von der Abdeckhaube 300 aufgespannte Volumen beziehungsweise in den verbleibenden Gasraum 350 als Teil dieses Volumens.

Nachfolgend wird der Betrieb des Schmelzofens mit einem Gefäßerker gemäß Figur 1 bei einem Abstichvorgang näher erläutert.

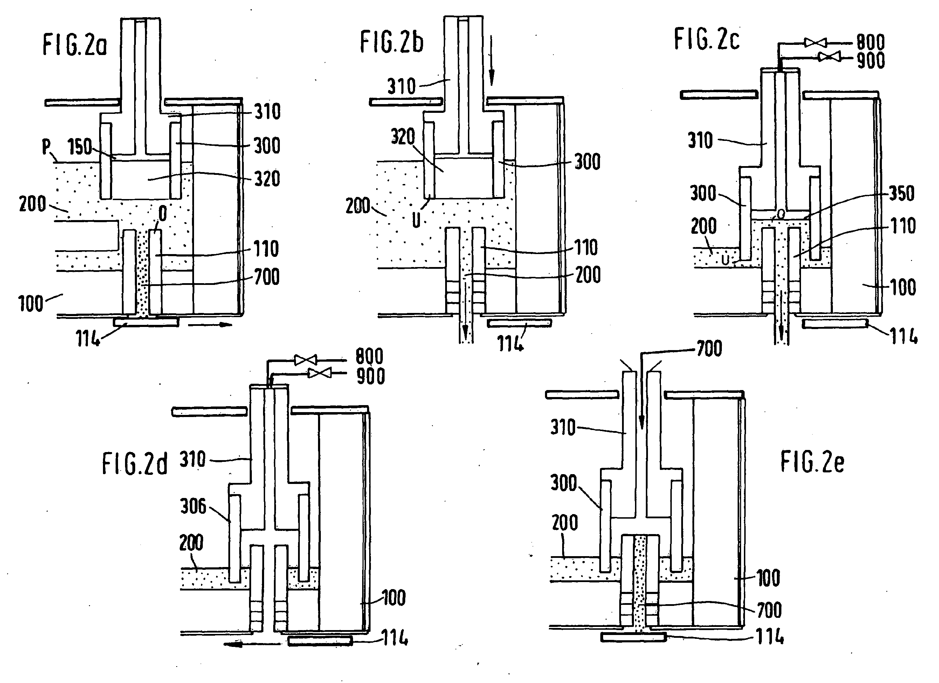

Figur 2a zeigt eine typische Ausgangssituation zu Beginn eines Abstichvorganges. Schmelze 200, die durch Einschmelzen eines Einsatzes in dem Schmelzofen entstanden ist, sammelt sich nicht nur in dessen Ofenwanne, sondern aufgrund einer Kanalverbindung (nicht gezeigt) zwischen der Ofenwanne und dem Gefäß 100 auch in diesem. In Figur 2a ist zu erkennen, dass der Pegel P der Schmelze deutlich über der Oberkante O des in das Innere des Gefäßerkers hineinragenden Teils 112 des Abstichkanals 110 liegt. Der Abstichkanal 110 ist in Figur 2a mit Granulat 700 verfüllt und durch den vor den Abstichkanal 110 geschobenen Abstichschieber 114 verschlossen, so dass die Schmelze 200 nicht durch den Abstichkanal 110 entweichen kann. Die Abdeckhaube 300 ist beispielhaft ein Stück weit in die Schmelze 200 eingetaucht.

Figur 2b zeigt einen Zustand des mit Schmelze 200 gefüllten Gefäßes 100 kurz nach Einleiten des Abstichvorganges. Der Abstichvorgang wurde dadurch eingeleitet, dass der Abstichschieber 114 im Vergleich zu Figur 2a nach rechts verschoben wurde und auf diese Weise den Abstichkanal 110 zunächst für einen Ausfluss des Granulates 700 und nachfolgend für ein Ausfließen der Schmelze 200 freigegeben hat.

Solange der Pegel P der Schmelze 200 höher liegt als die Oberkante O des Teils 112 des Abstichkanals, fließt die Schmelze 200 aufgrund der Schwerkraft automatisch durch den geöffneten Abstichkanal ab.

Um ein Abfließen der Schmelze 200 durch den Abstichkanal 110 auch dann noch zu ermöglichen, wenn deren Pegel P außerhalb der Abdeckhaube 300 unter das Niveau der Oberkante O des Abstichkanals 110 absinkt, wird erfindungsgemäß vorgeschlagen, die Abdeckhaube 300 mit dem Versorgungskanal soweit abzusenken, dass die Unterkante U von deren Rand in die Schmelze 200 eintaucht; siehe Fig. 2c. Die Abdeckhaube kann auch synchron mit dem sinkenden Pegel P verfahren werden. Durch das Eintauchen wird das durch die Abdeckhaube 300 aufgespannte Volumen druck- und vakuumdicht abgeschlossen. Es kann dann durch Evakuieren des Gasraums 350 und des Innern des Versorgungskanals 310 ein Unterdruck unter der Abdeckhaube 300 erzeugt werden, welcher die Schmelze 200 unter die Abdeckhaube 300 saugt und den Abfluss der Schmelze durch den Abstichkanal 110 auch dann noch aufrecht erhält. Die Evakuierung erfolgt dabei über die Evakuierungsleitung 800.

Bei verschleißbedingter verkürzter Unterkante der Abdeckhaube 300 wird diese gegebenenfalls zusammen mit dem Versorgungskanal 310 entsprechend weiter in die Schmelze abgesenkt als bei intaktem Rand, um in jedem Fall eine Abdichtung des Innenraumes der Abdeckhaube sicherzustellen.

Zum Abbrechen des Abstichvorganges gibt es verschiedene Möglichkeiten, von denen eine erste in Figur 2d dargestellt ist. Diese sieht vor, dass in das Volumen oberhalb des Pegels P der Schmelze unter der Abdeckhaube 300 Inertgas über die Gasleitung 900 und den Versorgungskanal 310 eingebracht wird. Das Inertgas ist mit einem hohen Druck beaufschlagt, welcher gewährleistet, dass die Schmelze aus dem Innenraum der Haube 300 und insbesondere aus der Umgebung der Oberkante O des Abstichkanals 110 verdrängt wird. Dies hat zur Folge, dass der Pegel der Schmelze 200 auch innerhalb der Abdeckhaube 300 nicht mehr über das Niveau der Oberkante O ansteigt und damit, dass keine Schmelze mehr durch den geöffneten Abstichkanal 110 entweichen kann. Stattdessen entweicht in diesem Fall Inertgas aus dem Abstichkanal.

Eine in Figur 2d nicht gezeigte zweite Methode zum Abbrechen des Abstichvorganges besteht darin, dass die Abdeckhaube 300 mit dem Versorgungskanal 310 vertikal soweit verfahren wird, dass selbst ihr unterer Rand U nicht mehr in die Schmelze eintaucht. Das Innere der Abdeckhaube 300 ist dann nicht mehr gasdicht abgeschlossen und es kann Gas bzw. Luft aus dem Gefäß durch einen Spalt zwischen der Abdeckhaube 300 und dem Pegel der Schmelze in das Innere der Abdeckhaube 300 eindringen und dort die Schmelze verdrängen, genau wie das unter Bezugnahme auf Figur 2d beschriebene Inertgas.

Insofern eignen sich sowohl die Gasbefüllung über die Gasleitung 900 gemäß Figur 2d wie auch das Verfahren der Abdeckhaube 300 nach oberhalb des Schmelzenpegels P außerhalb der Haube zum komfortablen Abbrechen, Unterbrechen oder Steuern des Abstichvorganges beziehungsweise des Ausfließens der Schmelze 200. Der Abstichvorgang wird schließlich beendet durch Verschließen des Abstichkanals 110 mit dem Abstichschieber 114 und Befüllen des Abstichkanals 110 vorzugsweise durch den Versorgungskanal 310 mit Granulat 700 (siehe Figur 2e).

Nach Abschluss des Abstichvorganges wird die Abdeckhaube 300 mit dem Versorgungskanal 310 vorteilhafterweise aus der Umgebung des Abstichkanals 110 soweit weg verfahren, dass sie auch bei einer nachfolgenden Befüllung des Gefäßes 100 mit Schmelze 200 nicht zwangsläufig mit der Schmelze 200 in Verbindung kommt. Dies hat, genau wie ein vollständiges Entfernen der Abdeckhaube aus dem Innern des Gefäßerkers, den Vorteil, dass ihr Verschleiß, den sie ansonsten bei einem Eintauchen in die Schmelze erleidet, minimiert wird.

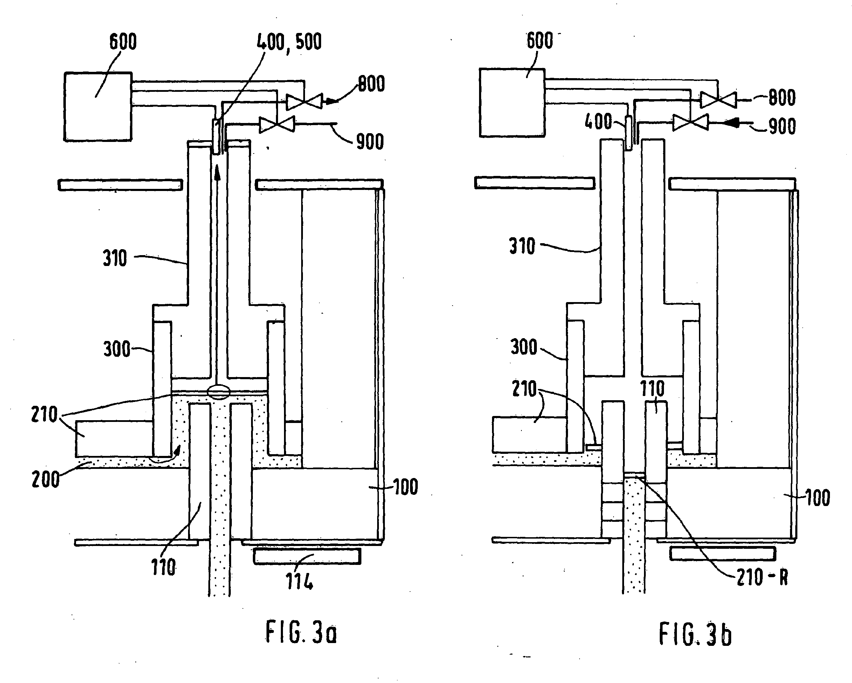

Die Figuren 3a und 3b betreffen die Steuerung eines Abstichvorganges mithilfe einer Steuereinrichtung 600 beim Eindringen von Schlacke 210 in das Innere der Abdeckhaube 300. Zum Erkennen von eingedrungener Schlacke 210 ist vorzugsweise ein optischer Schlackensensor 400 vorgesehen, welcher die Oberfläche der Schmelze im Innern der Haube auf das Vorhandensein von Schlacke 210 hin abtastet beziehungsweise untersucht. Mit diesem Sensor lässt sich das Eindringen von Schlacke zeitnah durch Änderung der Emissivität erfassen. Wird das Eindringen beziehungsweise Nachströmen von Schlacke 210 unter die Abdeckhaube 300 erkannt, so veranlasst die Steuereinrichtung 600 im Ansprechen auf ein entsprechendes Signal des Schlackensensors 400 unverzüglich eine Unterbrechung beziehungsweise einen Abbruch des Abstichvorganges. Ein Beispiel für das Abbrechen des Abstichvorganges in diesem Fall ist in Figur 3b gezeigt, wonach die Steuereinrichtung 600 den Abbruch des Abstichvorganges durch Öffnen der Gasleitung 900 einleitet; vergleiche die obige Beschreibung eines Abbruchs des Abstechvorganges gemäß Figur 2d. Dabei wird Inertgas unter Druck in den Versorgungskanal 310 und den Gasraum 350 im Innern der Abdeckhaube oberhalb der Schlacke 210 eingebracht, wodurch die Schmelze mit der auf ihr schwimmenden Schlacke 210 zumindest weitgehend aus dem durch die Abdeckhaube 300 aufgespannten Volumen und dem Abstichkanal verdrängt wird. Die relativ kleinen Schlackenvolumen unterhalb der Abdeckhaube 300 führen zu besonders kleinen Schlackenresten 210-R beim Abstich.

Bei einem Siphonbetrieb, wie in den Figuren 2c-2e und 3a, b gezeigt, kann der Schmelzenfluss dadurch präziser gesteuert werden kann, dass mindestens ein Schmelzenpegelsensor in der Abdeckhaube 300 oder in dem Versorgungskanal 310 angebracht ist zum Erfassen des Pegels der Schmelze 200 unter der Abdeckhaube 300. Nach Maßgabe der Höhe des von dem Schmelzenpegelsensor 500 gemessenen Pegels wird dann die Verfahrposition der Abdeckhaube 300 und des Versorgungskanals 310 durch die Steuereinrichtung 600 gesteuert. Der Schmelzpegelsensor kann als Abstandsensor ausgebildet sein, welcher den Pegel P der Schmelze 200 vorzugsweise durch den Versorgungskanal 310 hindurch erfasst. Alternativ kann der Schmelzpegelsensor 500 in Form von vorzugsweise mehreren bei verschiedenen Pegelhöhen im Innern der Abdeckhaube 300 angebrachten Kontakten ausgebildet sein, welche bei Kontakt mit der Schmelze 200 ein elektrisches Signal für die Steuereinrichtung 600 erzeugen. Altemativ dazu kann der Schmelzenpegelsensor auch als Unterdrucksensor ausgebildet sein, welcher den Pegel der Schmelze 200 unter der Abdeckhaube 300 nach Maßgabe der Größe des Unterdrucks oder nach Maßgabe einer Änderung des Unterdrucks unter der Abdeckhaube erfasst. Ein Indiz dafür, dass die Unterkante U der Abdeckhaube 300 beim Absenken der Abdeckhaube 300 den Pegel P der Schmelze 200 erreicht hat, ist dann gegeben, wenn der Innenraum der Abdeckhaube 300 während des Absenkens der Haube evakuiert wird und der Schmelzenpegelsensor 500 zu einem bestimmten Zeitpunkt einen plötzlichen Abfall des Druckes im Innern der Haube feststellt. Der Abfall des Druckes basiert dann auf einem Verschließen des Innenraumes der Haube 300 in der Weise, dass die Unterkante der Haube in die Schmelze eintaucht. Ab diesem Zeitpunkt kann dann der Evakuierungsvorgang zum Ansaugen der Schmelze in das Innere der Haube 300 wie oben beschrieben fortgesetzt werden beziehungsweise erfolgen.

Ein Siphonbetrieb bringt aufgrund der damit verbundenen mehrfachen Fließrichtungsumleitung der Schmelze immer einen höheren Fließwiderstand mit sich als ein gradliniger Abstichkanal. Das beschriebene Konzept zur Steuerung eines Abstichvorganges zeichnet sich jedoch insgesamt durch einen vergleichsweise widerstandsarmen Abfluss der Schmelze 200 aus, weil die Schmelze zu Beginn eines Abstichvorganges, das heißt zumindest solange ihr Pegel P über der Oberkante O des Teils 112 liegt, aufgrund der Schwerkraft durch den gradlinigen Abstichkanal 110 relativ reibungsfrei abfließen kann und ein Siphonbetrieb mit größerem Fließwiderstand während dieser Zeit vermieden wird. Gemäß der vorliegenden Erfindung wird ein Siphonbetrieb durch Absenken der Haube 300 über den Teil 112 des Abstichkanals 110 nur gegen Ende des Abstichvorganges vorgeschlagen, wenn der Pegel der Schmelze P zwischen dem Niveau der Oberkante des Teils 112 und dem Niveau der Unterkante der Abdeckhaube 300 liegt. Über den gesamten Abstichzeitraum gesehen ist deshalb der Fließwiderstand bei dem beschriebenen Abstichkonzept wesentlich geringer als bei einem erfindungsgemäßen alternativen stationären Siphonbetrieb, bei dem die Abdeckhaube feststehend über den Teil 112 gestülpt und nicht verfahrbar ausgebildet wäre.

## Patentansprüche

1. Schmelzofen, beispielsweise Lichtbogenofen, zum Erzeugen einer Schmelze (200), umfassend
ein Gefäß (100) zum Aufnehmen von zumindest einem Teil der Schmelze (200);
einen Abstichkanal (110) im Boden des Gefäßes zum Abstechen der Schmelze, wobei ein Teil (112) des Abstichkanals (110) über das Niveau des Bodens (B) des Gefäßes (100) hinaus In das Innere des Gefäßes hineinragend ausgebildet ist; und
eine Abdeckhaube (300) mit mindestens einem Versorgungskanal (310) **dadurch gekennzeichnet, dass**
die Abdeckhaube (300) über den in das Innere des Gefäßes hineinragenden Teil (112) des Abstichkanals (110) verfahrbar ausgebildet ist; und
der Versorgungskanal (310) ausgebildet ist zum Zuführen von Gas In ein von der Abdeckhaube aufgespanntes Volumen (320) oder zum Evakuieren dieses Volumens oder zum Zuführen von Granulat durch das Innere der Abdeckhaube (300) hindurch in den Abstichkanal (110), um diesen zu verschließen.

2. Schmelzofen nach Anspruch 1,
**dadurch gekennzeichnet,**
**dass** die Abdeckhaube (300) lösbar mit dem Versorgungskanal (310) verbunden ist.

3. Schmelzofen nach Anspruch 2,
**dadurch gekennzeichnet,**
**dass** die Abdeckhaube (300) oder zumindest eine äußere Beschichtung der Abdeckhaube zum Eintauchen in die Schmelze (200) feuerfest ausgebildet ist.

4. Schmelzofen nach einem der vorangegangenen Ansprüche,
**gekennzeichnet durch**,
einen Schlackensensor (400) zum vorzugsweise optischen Erfassen von unter die Abdeckhaube (300) strömender Schlacke.

5. Schmelzofen nach einem der vorangegangenen Ansprüche,
**gekennzeichnet durch**,
mindestens einen Schmeizenpegelsensor (500) zum Erfassen des Pegels der Schmelze (200) unter der Abdeckhaube (300).

6. Schmelzofen nach Anspruch 5,
**dadurch gekennzeichnet,**
**dass** der Schmelzenpegelsensor (500)
als Abstandssensor ausgebildet Ist, welcher den Pegel der Schmelze (200) vorzugsweise durch den Versorgungskanal (310) hindurch erfasst; oder in Form von vorzugsweise mehreren bei verschiedenen Pegelhöhen im Innern der Abdeckhaube (300) angebrachten Kontakten ausgebildet ist, welche bei Kontakt mit der Schmelze ein elektrisches Signal erzeugen; oder als Unterdrucksensor ausgebildet ist, welcher den Pegel der Schmelze unter der Abdeckhaube (300) nach Maßgabe der Größe des Unterdrucks oder nach Maßgabe einer Änderung des Unterdrucks unter der Abdeckhaube erfasst.

7. Schmelzofen nach einem der vorangegangenen Ansprüche,
**dadurch gekennzeichnet,**
**dass** derjenige Teil (112) des Abstichkanals (110), welcher im Wesentlichen vom Bodenniveau der Schmelze aus In das Innere des Gefäßes (110) hineinragend ausgebildet ist, mit dem restlichen Teil des Abstichkanals (110) lösbar verbunden Ist.

8. Schmelzofen nach einem der vorangegangenen Ansprüche,
**gekennzeichnet durch**,
eine Steuereinrichtung (600) zum Steuern des Flusses der Schmelze in dem Abstichkanal (110) **durch** Steuern des Gasgehaltes oder des Vakuums unter der Abdeckhaube (300) im Ansprechen auf Signale des Schiackensensors (400) und/oder des Schmeizenpegelsensors (500).

9. Schmelzofen nach einem der vorangegangenen Ansprüche,
**dadurch gekennzeichnet,**
**dass** das Gefäß (100) als Gefäßerker ausgebildet ist, In dessen Boden der Abstichkanal (110) vorgesehen ist und wobei der Gefäßerker so mit einer Schmelzenwanne des Schmelzofens verbunden ist, dass die Schmelze (200) bei einem Abstichvorgang aus der Wanne in das Gefäß (100) fließt.

10. Verfahren zum Betreiben eines Schmelzofens mit einem Gefäß (100) zum Aufnehmen von zumindest einem Teil einer Schmelze (200) und einem Abstichkanal (110) im Boden des Gefäßes zum Abstechen der Schmelze, umfassend den Schritt:
Erzeugen der Schmelze (200) durch Einschmelzen eines Einsatzes in dem Gefäß (100), wobei die Schmelze (200) In dem Gefäß (100) einen über das Niveau des Bodens (B) des Gefäßes (100) hinaus In des Gefäßes hineinragenden Teil (112) des Abstichkanals (110) zumindest teilwelse von außen umspült;
Positionieren einer nach unten offenen Abdeckhaube (300) bereits vor oder erst während eines Abstichvorganges so, dass zumindest ein unterer Rand (U) der Abdeckhaube (300) in die Schmelze (200) eintaucht und dass der in das Gefäß (100) hinragende Teil (112) des Abstichkanals (110) in ein von der Abdeckhaube (300) aufgespanntes Volumen (320) hineinragt; und
Evakuieren von zumindest einem Teil des aufgespannten Volumens, wenn der Pegel der Schmelze (200) während des Abstichvorganges unter die Oberkante (O) des in das Gefäß hineinragenden Teils (112) des Abstichkanals sinkt.

11. Verfahren nach Anspruch 10,
**gekennzeichnet durch**,
die Schritte:
- Erkennen, wenn Schlacke (210) auf der Schmelze (200) unter die Abdeckhaube (300) eindringt; und
- Stoppen des Abstichvorganges, wenn dies erkannt wird.

12. Verfahren nach einem der Ansprüche 11,
**dadurch gekennzeichnet,**
**dass** ein Stoppen oder Unterbrechen des Abstichvorganges erfolgt durch Einbringen von inertgas in das durch die Abdeckhaube aufgespannte Volumen, wodurch der Pegel der Schmelze dann vorzugsweise auf ein Niveau zwischen der Oberkante (O) des In das Gefäß (100) hineinragenden Teils (112) des Abstichkanals und dem unteren Rand (U) der Abdeckhaube (300) absinkt.

13. Verfahren nach einem der Ansprüche 10-12,
**dadurch gekennzeichnet,**
**dass** die Abdeckhaube (300) dann, wenn kein Abstichvorgang erfolgt, nach außerhalb der Schmelze (200) oder nach außerhalb des Gefäßes (100) verfahren wird.

14. Verfahren nach einem der Ansprüche 10-13,
**gekennzeichnet durch**,
das Einbringen von Granulat (700) **durch** die Abdeckhaube (300) hindurch in den Abstichkanal (110) um diesen zu verschließen.

## Claims

1. Smelting furnace, particularly electric arc furnace, for producing a melt (200), comprising
a vessel (100) for receiving at least a part of the melt (200);
a tap channel (110) in the base of the vessel for tapping off the melt, wherein a part (112) of the tap channel (110) is formed above the level of the base (B) of the vessel (100) to protrude into the interior of the vessel; and
a cover hood (300) with at least one supply channel (310),
**characterised in that**
the cover hood (300) is formed to be movable over the part (112) of the tap channel (110) protruding into the interior of the vessel; and
the supply channel (310) is constructed for the feed of gas into a volume (320) spanned by the cover hood or for the evacuation of this volume or for the feed of granulate through the interior of the cover hood (300) into the tap channel (110) in order to close this.

2. Smelting furnace according to claim 1, **characterised in that** the cover hood (300) is detachably connected with the supply channel (310).

3. Smelting furnace according to claim 2, **characterised in that** the cover hood (300) or at least an outer coating of the cover hood is of refractory construction for dipping into the melt (200).

4. Smelting furnace according to any one of the preceding claims, **characterised by** a slag sensor (400) for preferably optical detection of slag flowing below the cover hood (300).

5. Smelting furnace according to any one of the preceding claims, **characterised by** at least one melt level sensor (500) for detecting the level of the melt (200) below the cover hood (300).

6. Smelting furnace according to claim 5, **characterised in that** the melt level sensor (500) is constructed as a distance sensor which detects the level of the melt (200) preferably through the supply channel (310); or is constructed in the form of preferably several contacts, which are mounted at different level heights in the interior of the cover hood (300) and which on contact with the melt generate an electrical signal; or is constructed as a sub-atmospheric pressure sensor which detects the level of the melt under the cover hood (300) in dependence on the value of the sub-atmospheric pressure or in dependence on a change in the sub-atmospheric pressure under the cover hood.

7. Smelting furnace according to any one of the preceding claims, **characterised in that** that part (112) of the tap channel (110) constructed to project substantially from the bottom level of the melt into the interior of the vessel (100) is detachably connected with the remaining part of the tap channel (110).

8. Smelting furnace according to any one of the preceding claims, **characterised by** a control device (600) for controlling the flow of melt in the tap channel (110) by controlling the gas content or the vacuum below the cover hood (300) in response to signals of the slag sensor (400) and/or of the melt level sensor (500).

9. Smelting furnace according to any one of the preceding claims, **characterised in that** the vessel (100) is constructed as a vessel bay, in the base of which the tap channel (110) is provided, and wherein the vessel bay is so connected with a melt sump of the smelting furnace that the melt (200) flows out of the sump into the vessel (100) during a tapping process.

10. Method of operating a smelting furnace with a vessel (100) for receiving at least a part of a melt (200) and a tap channel (110) in the base of the vessel for tapping the melt, comprising the steps:
producing the melt (200) by smelting a charge in the vessel (100), wherein the melt (200) in the vessel (100) flows around a part (112), which protrudes above the level of the base (B) of the vessel (100) into the vessel, of the tap channel (110) at least partly from the outside;
positioning a downwardly open cover hood (300) already before or during a tapping process so that at least a lower edge (U) of the cover hood (300) dips into the melt (200) and that the part (112) of the tap channel (110) protruding into the vessel (100) extends into a volume (320) spanned by the cover hood (300); and
evacuating at least a part of the spanned volume when the level of the melt (200) during the tapping process drops below the upper edge (O) of the part (112) of the tap channel protruding into the vessel.

11. Method according to claim 10, **characterised by** the steps:
- recognising when slag (210) penetrates onto the melt (200) below the cover hood (300); and
- stopping the tapping process when this is recognised.

12. Method according to one of claims 11, **characterised in that** stopping or interrupting the tapping process carried out by introduction of inert gas into the volume spanned by the cover hood, whereby the level of the melt then drops preferably to a level between the upper edge (O) of the part (112), which protrudes into the vessel (100), of the tap channel and the lower edge (U) of the cover hood (300).

13. Method according to any one of claims 10 to 12, **characterised in that** the cover hood (300) is moved to outside the melt (200) or to outside the vessel (100) when no tapping process is taking place.

14. Method according to any one of claims 10 to 13, **characterised by** the introduction of granulate (700) through the cover hood (300) into the tap channel (110) in order to close this.

## Revendications

1. Four de fusion, par exemple four à arc électrique, pour la production d'une masse fondue (200), comprenant
un récipient (100) pour recevoir au moins une partie de la masse fondue (200) ; un canal de coulée (110) dans le fond du récipient pour couler la masse fondue, une partie (112) du canal de coulée (110) étant réalisée en pénétrant, au-dessus du niveau (B) du récipient (100), à l'intérieur du récipient ; et
un capot de recouvrement (300) présentant au moins un canal d'alimentation (310)
**caractérisé en ce que**
le capot de recouvrement (300) est réalisé de manière mobile au-dessus de la partie (112) du canal de coulée (110) pénétrant à l'intérieur du récipient ; et
le canal d'alimentation (310) est réalisé pour alimenter un gaz dans un volume (320) délimité par le capot de recouvrement ou pour la mise sous vide de ce volume ou pour alimenter du granulat au travers de l'intérieur du capot de recouvrement (300) dans le canal de coulée (110), pour fermer celui-ci.

2. Four de fusion selon la revendication 1, **caractérisé en ce que** le capot de recouvrement (300) est relié de manière amovible avec le canal d'alimentation (310).

3. Four de fusion selon la revendication 2, **caractérisé en ce que** le capot de recouvrement (300) ou au moins un revêtement extérieur du capot de recouvrement est réalisé de manière réfractaire pour l'immersion dans la masse fondue (200).

4. Four de fusion selon l'une quelconque des revendications précédentes, **caractérisé par**
un capteur de scories (400) pour la détection, de préférence optique, des scories coulant sous le capot de recouvrement (300).

5. Four de fusion selon l'une quelconque des revendications précédentes, **caractérisé par**
au moins un capteur (500) du niveau de la masse fondue pour détecter le niveau de la masse fondue (200) sous le capot de recouvrement (300).

6. Four de fusion selon la revendication 5, **caractérisé**
**en ce que** le capteur (500) du niveau de la masse fondue
est réalisé sous forme de capteur de distance, qui détecte le niveau de la masse fondue (200) de préférence au travers du canal d'alimentation (310) ; ou est réalisé sous forme de contacts, de préférence de plusieurs contacts disposés à différentes hauteurs de niveau à l'intérieur du capot de recouvrement (300), qui produisent un signal électrique lors du contact avec la masse fondue ; ou
est réalisé sous forme de capteur de dépression, qui détecte le niveau de la masse fondue sous le capot de recouvrement (300) en fonction de la grandeur de la dépression ou en fonction d'une modification de la dépression sous le capot de recouvrement.

7. Four de fusion selon l'une quelconque des revendications précédentes, **caractérisé**
**en ce que** la partie (112) du canal de coulée (110), qui est essentiellement réalisée de manière à pénétrer, à partir du niveau du fond de la masse fondue, à l'intérieur du récipient (110), est reliée de manière amovible avec le reste du canal de coulée (110).

8. Four de fusion selon l'une quelconque des revendications précédentes, **caractérisé par**
un dispositif de commande (600) pour contrôler le flux de la masse fondue dans le canal de coulée (110) en contrôlant la teneur en gaz ou le vide sous le capot de recouvrement (300) en réponse à des signaux du capteur de scories (400) et/ou du capteur du niveau de masse fondue (500).

9. Four de fusion selon l'une quelconque des revendications précédentes, **caractérisé**
**en ce que** le récipient (100) est réalisé avec une partie en saillie dans le fond de laquelle est prévu le canal de coulée (110) et où la partie en saillie du récipient est reliée avec une cuve de fusion du four de fusion de manière telle que la masse fondue (200) coule hors de la cuve dans le récipient (100) lors d'un processus de coulée.

10. Procédé d'exploitation d'un four de fusion présentant un récipient (100) destiné à recevoir au moins une partie d'une masse fondue (200) et un canal de coulée (110) dans le fond du récipient pour la coulée de la masse fondue, comprenant l'étape de :
production de la masse fondue (200) par fusion d'une charge dans le récipient (100), où la masse fondue (200) dans le récipient (100) entoure au moins partiellement, à l'extérieur, une partie (112) du canal de coulée (110) en saillie au-dessus du fond (B) du récipient (100) dans le récipient ;
positionnement d'un capot de recouvrement (300) ouvert vers le bas déjà avant ou seulement pendant un processus de coulée, de manière telle qu'au moins un bord inférieur (U) du capot de recouvrement (300) pénètre dans la masse fondue (200) et que la partie (112) du canal de coulée (110) pénétrant dans le récipient (100) pénètre dans un volume (320) délimité par le capot de recouvrement (300) et mise sous vide d'au moins une partie du volume délimité, lorsque le niveau de la masse fondue (200) descend pendant le processus de coulée au-dessous de la face supérieure (O) de la partie (112) du canal de coulée pénétrant dans le récipient.

11. Procédé selon la revendication 10, **caractérisé par** les étapes
- détection du moment où les scories (210) sur la masse fondue (200) pénètrent sous le capot de recouvrement (300) ; et
- arrêt du processus de coulée lorsque ceci est détecté.

12. Procédé selon l'une quelconque des revendications 11, **caractérisé en ce qu'**un arrêt ou une interruption du processus de coulée se produit en introduisant un gaz inerte dans le volume délimité par le capot de recouvrement, suite à quoi le niveau de la masse fondue descend alors de préférence à un niveau entre la face supérieure (O) de la partie (112) du canal de coulée pénétrant dans le récipient (100) et le bord inférieur (U) du capot de recouvrement (300).

13. Procédé selon l'une quelconque des revendications 10-12, **caractérisé**
**en ce que** le capot de recouvrement (300) est déplacé, lorsqu'il ne se produit pas de processus de coulée, vers l'extérieur de la masse fondue (200) ou vers l'extérieur du récipient (100).

14. Procédé selon l'une quelconque des revendications 10-13, **caractérisé par**
l'introduction de granulat (700) au travers du capot de recouvrement (300) dans le canal de coulée (110) pour fermer celui-ci.
